# EUROPEAN PATENT APPLICATION

(11) **EP 3 323 908 A1**
(43) Date of publication of application: **23.05.2018**
(21) Application number: 17201991.1
(22) Date of filing: 16.11.2017
(51) Int. Cl.: C23C 4/02, B23P 6/00, C23C 24/04, F01D 5/00, C23C 4/134

(54) **METHOD OF REVERSING SURFACE STRESS ON A COATED COMPONENT**

(30) Priority: 17.11.2016 US 201662423421 P
(71) Applicant: Sikorsky Aircraft Corporation, Stratford, CT 06615 (US)
(72) Inventor: Choi, JinKyu, Trumbull, CT Connecticut 06611 (US)
(74) Representative: Schmitt-Nilson Schraud Waibel Wohlfrom Patentanwälte Partnerschaft mbB

(57) **Abstract**

A method of reversing stresses in a component includes cold working a substrate creating a first stress level in the component; and applying a material to the substrate after cold working, the material inducing a second stress level that cancels the first stress level.

## Description

Exemplary embodiments pertain to the art of coating systems and, more particularly, to a method of reversing surface stress on a coated component.

From time to time it may become desirable to affect a repair on a component. For example, during use, components may become damaged due to interactions with airborne debris, munition contact, inadvertent contacts with solid objects and the like. Components that may be exposed to harsh environment may be subjected to various treatment processes. For example, a component may be heat treated in order to enhance strength, flexibility and/or hardness properties.

When repairing a damaged component, oftentimes material is added through, for example, a cold spray deposition (CSD) process. In a CSD process, a replacement material may be sprayed onto the component to replace material lost or intentionally removed from a damaged area. Following such a repair, it is often inadvisable to perform a heat treatment on a repaired component for fear of affecting temper. Additionally, while providing a strong repair, stresses may develop at an interface of the coating and the substrate following the CSD process. The stresses could reduce an overall fatigue life of the component.

Disclosed is a method of reversing stresses in a component including cold working a substrate creating a first stress level in the component; and applying a material to the substrate after cold working. The material inducing a second stress level that cancels the first stress level.

In addition to one or more of the features described above or below, or as an alternative, further embodiments could include wherein cold working the substrate includes surface peening the substrate.

In addition to one or more of the features described above or below, or as an alternative, further embodiments could include wherein peening the substrate comprises one of a glass bead peening process, a laser peening process, and a cavitation peening process.

In addition to one or more of the features described above or below, or as an alternative, further embodiments could include wherein applying the material creates a thermal gradient between the substrate and the material

In addition to one or more of the features described above or below, or as an alternative, further embodiments could include wherein applying the material to the substrate includes at least one of a cold spray deposition (CSD) process, and a flame spray process.

In addition to one or more of the features described above or below, or as an alternative, further embodiments could include wherein applying material to the substrate comprises an additive manufacturing process.

In addition to one or more of the features described above or below, or as an alternative, further embodiments could include removing a portion of the substrate to form a repair zone.

In addition to one or more of the features described above or below, or as an alternative, further embodiments could include wherein cold working the substrate includes cold working the repair zone.

In addition to one or more of the features described above or below, or as an alternative, further embodiments could include wherein applying the material to the substrate includes replacing the portion of the material at the repair zone.

In addition to one or more of the features described above or below, or as an alternative, further embodiments could include wherein replacing the portion of the material includes one of a cold spray deposition process and a flame spray process.

In addition to one or more of the features described above or below, or as an alternative, further embodiments could include a gearbox housing formed by the method in accordance with an exemplary embodiment.

In addition to one or more of the features described above or below, or as an alternative, further embodiments could include a gearbox housing repaired by the method in accordance with an exemplary embodiment.

In addition to one or more of the features described above or below, or as an alternative, further embodiments could include an airframe component formed by the method in accordance with an exemplary embodiment.

In addition to one or more of the features described above or below, or as an alternative, further embodiments could include an airframe component repaired by the method in accordance with an exemplary embodiment.

The following descriptions should not be considered limiting in any way. With reference to the accompanying drawings, like elements are numbered alike:
FIG. 1 depicts a rotary wing aircraft including a coated component treated by a method of reversing surface stresses, in accordance with an exemplary embodiment;
FIG. 2 depicts a gearbox housing of the rotary wing aircraft of FIG. 1 treated by the method of reversing surface stresses, in accordance with an exemplary embodiment;
FIG. 3 depicts a flow chart illustrating the method of repairing a component including reversing surface stresses, in accordance with an aspect of an exemplary embodiment;
FIG. 4 depicts the gearbox housing of FIG. 2 following removal of a damaged area forming a repair zone, in accordance with an aspect of an exemplary embodiment;
FIG. 5 depicts the gearbox housing of FIG. 4 after cold working the repair zone, in accordance with an aspect of an exemplary embodiment;
FIG. 6 depicts a graph illustrating a stresses on a substrate treated by the method of reversing surface stresses, in accordance with an exemplary embodiment; and
FIG. 7 depicts the gearbox housing of FIG. 5 following application of a material to the repair zone, in accordance with an aspect of an exemplary embodiment.

A detailed description of one or more embodiments of the disclosed apparatus and method are presented herein by way of exemplification and not limitation with reference to the Figures.

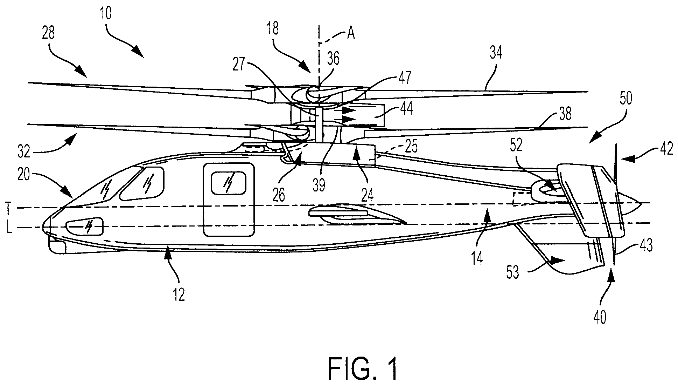

FIG. 1 depicts an exemplary embodiment of a rotary wing, vertical takeoff and landing (VTOL) aircraft 10. Aircraft 10 includes an airframe or fuselage 12 having a plurality of surfaces (not separately labeled), and an extending tail 14. A coaxial main rotor assembly 18 is located at fuselage 12 and rotates about a main rotor axis, A. In an exemplary embodiment, fuselage 12 includes a cockpit 20 having two seats for flight crew (e.g., pilot and co-pilot) and six seats for passengers (not shown). Main rotor assembly 18 is driven by a prime mover 24, for example, one or more engines 25, via a gearbox 26. It is to be understood that prime mover 24 may take on various forms. Main rotor assembly 18 may be operatively coupled to gearbox 26 through at least one main rotor shaft indicated generally at 27.

Main rotor assembly 18 includes an upper rotor assembly 28 that may be driven in a first direction (e.g., counter-clockwise) about the main rotor axis, A, and a lower rotor assembly 32 that may be driven in a second direction (e.g., clockwise) about the main rotor axis, A, opposite to the first direction (i.e., counter rotating rotors). Of course, it should be understood that upper and lower rotor assemblies 28 and 32 may be driven in the same direction.

In accordance with an exemplary embodiment, upper rotor assembly 28 includes a first plurality of rotor blades 34 supported by a first or upper rotor hub 36. Lower rotor assembly 32 includes a second plurality of rotor blades 38 supported by a second or lower rotor hub 39. In some embodiments, aircraft 10 may include an auxiliary propulsion assembly 40 that may take the form of a tail rotor assembly 42 located at extending tail 14. Auxiliary propulsion assembly 40 provides translational thrust (forward or rearward) for aircraft 10. Tail rotor assembly 42 includes a plurality of tail rotor blades 43.

Main rotor assembly 18 also includes a shaft fairing 44 generally located between and around the upper and lower rotor assemblies 28 and 32 such that lower rotor hub 39 may be at least partially contained therein. Shaft fairing 44 extends about rotor shaft 27. Shaft fairing 44 extends between lower rotor hub 39 and upper rotor hub 36 and operates to reduce drag which might otherwise exist at rotor shaft 27.

First plurality of rotor blades 34 may be connected to upper rotor hub 36 in a hingeless manner, also referred to as a rigid rotor system. Similarly, second plurality of rotor blades 38 may be connected to lower rotor hub 39 in a hingeless manner. Although a particular aircraft configuration is illustrated in this non-limiting embodiment, other rotary wing aircraft will also benefit from embodiments of the invention. Although the dual rotor system is depicted as coaxial, embodiments could also include other main rotor and tail rotor configurations. Moreover, aspects can be used in non-rotary wing aircraft, including fixed wing aircraft and tilt wing aircraft using rotor blades and/or propellers, and can be used in maritime propulsion systems, wind turbines and the like. Additionally, geared turbofans having a gearbox between engine output members and an axial fan shaft may also benefit from the exemplary embodiments.

Tail rotor assembly 42, is connected to, and driven by, prime mover 24 via gearbox 26. Auxiliary propulsion assembly 40 may be mounted to the rear of the fuselage 12 with a translational thrust axis, T, oriented substantially horizontal and parallel to the aircraft longitudinal axis, L, to provide thrust for high-speed flight. The term "parallel" should be understood to include a translational thrust axis that is coincident with the longitudinal axis. Translational thrust axis, T, corresponds to the axis of rotation of tail rotor assembly 42. While shown in the context of a pusher-prop configuration, it is understood that the auxiliary propulsion assembly 40 could also be a more conventional tail rotor assembly oriented to provide yaw control in addition to, or instead of, translational thrust. It should be further understood that any such system or other auxiliary propulsion assembly may alternatively or additionally be utilized. Alternative auxiliary propulsion assemblies may include different propulsion forms, such as a jet engine. In accordance with an aspect of an exemplary embodiment, tail rotor blades may include a variable pitch. More specifically, the pitch of tail rotor blades 43 may be altered to increase or decrease the thrust or to change the direction of thrust (e.g., forward or rearward).

In accordance with another aspect of an exemplary embodiment, extending tail 14 includes a tail section 50 including starboard and port horizontal stabilizers, one of which is indicated at 52. Each horizontal stabilizer may include a corresponding elevator and rudder that act as controllable surfaces, e.g., surfaces that alter a flight path and/or characteristic of aircraft 10. Tail section 50 also includes a vertical stabilizer 53 that extends downward from extending tail 14, as well as elevators and rudders (not shown).

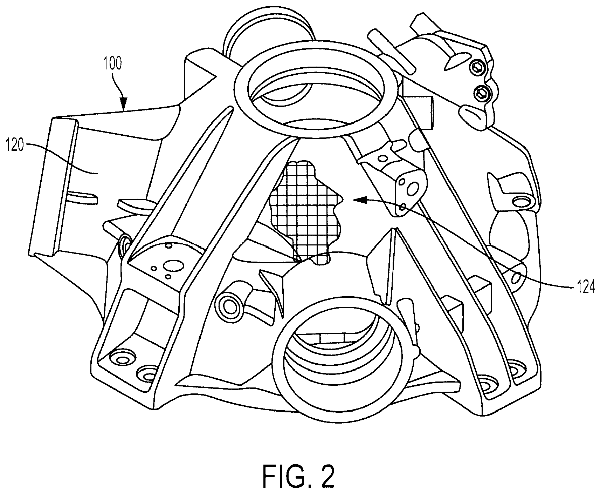

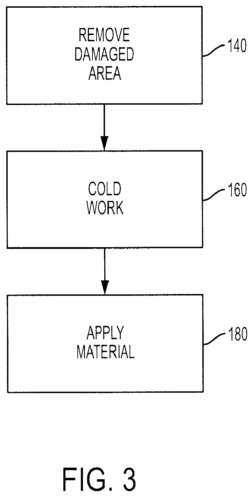

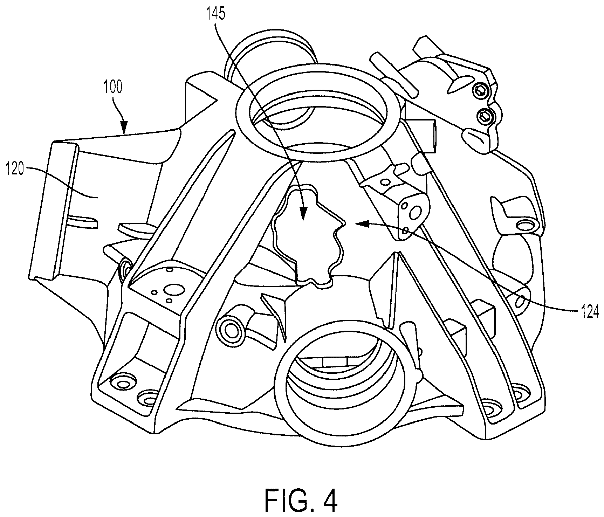

As shown in FIG. 2, gearbox 26 includes a gearbox housing 100 having a substrate 120. Gearbox housing 100 may be formed from magnesium. It is to be understood however that exemplary embodiments described herein may be implemented with a wide array of materials. In accordance with an exemplary embodiment, gearbox housing 100 includes a damaged area 124. Damaged area 124 may be repaired by a method of reversing surface stresses shown in FIG. 3. In block 140 material is removed from damaged area 124 forming a repair zone 145 as shown in FIG. 4.

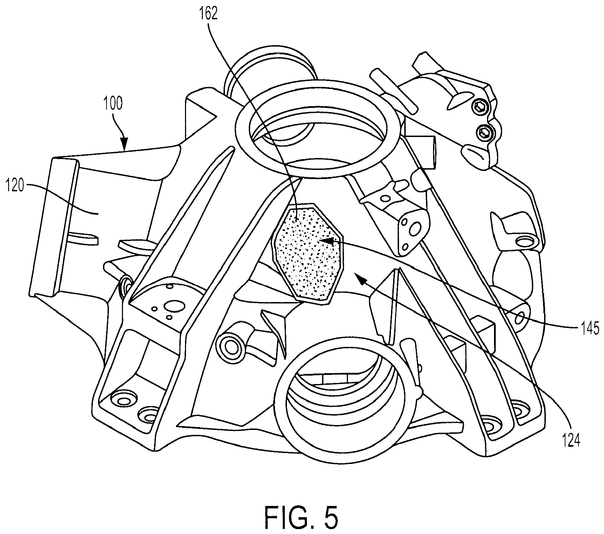

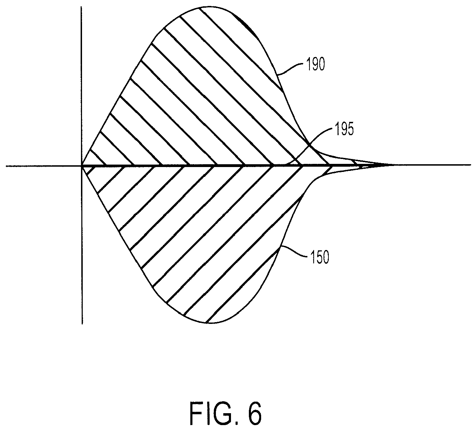

As shown in FIG. 5, repair zone 145 may then be cold worked as indicated in block 160 forming a cold worked surface 162 having a first stress level. Cold working may include a glass bead peening process, a laser peening process, a cavitation peening process or other process that affects material properties of substrate 120. It is to be understood that the cold working process may be performed on repair zone 145, areas of substrate 120 adjacent to repair zone 145 or all portions of substrate 120. It is also to be understood that the particular process employed in cold working may vary. Cold working induces stresses in substrate 120 as shown by curve 150 in FIG. 6

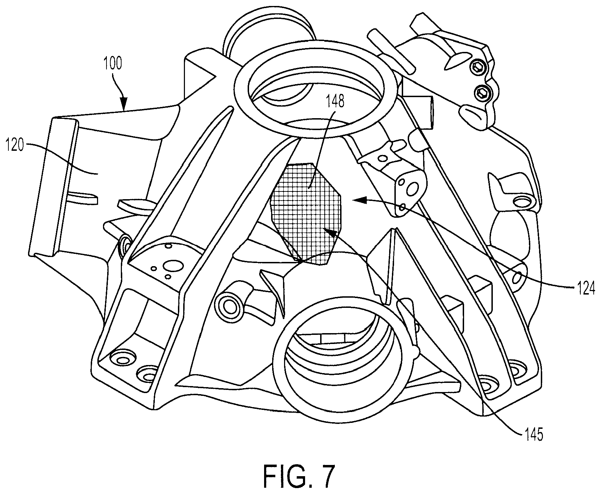

After cold working, a material 148 is added back to repair zone 145 in block 180 as shown in FIG. 7 creating a second stress level on substrate 120. Material 148 may be added/replaced in repair zone 145 through a variety of processes. In an example, material 148 may be added or replaced through a cold spray deposition (CSD) process, a flame spray process or other additive manufacturing techniques. The term "additive manufacturing techniques" should be understood to describe any process in which material is applied to a substrate with the application of the material(s) creating stresses in the substrate. Examples of such processes/techniques may include powder bed fusion, such as selective laser sintering (SLS), selective laser melting (SLM), and electron beam melting (EBM), and direct energy deposition (DED). It is to be understood that additional techniques not described may also meet the definition of additive manufacturing described above.

In another example, material 148 may be added/replaced by an additive manufacturing process. It is to be understood that the particular process employed to add material 148 may vary. Adding/replacing material 148 to gearbox housing 100 may create a thermal gradient that induces stresses in substrate 120 such as shown by curve 190 in FIG. 6. The stresses induced by cold working are counteracted or reversed by the stresses induced through the application of material 148 in a net substantially zero stress on substrate 120 as indicated by curve 195.

It is to be understood that the exemplary embodiments alleviate or reverse stresses induced by an application of, for example, a thermal spray particularly when additional heat treatment is contraindicated. Alleviating or reversing stresses induced by the application will increase an overall operational life of a component, particularly a repaired component. The reversal or alleviation of stresses increases fatigue life which, also may enhance a mean time to failure calculation for the component thereby reducing a requirement for early replacement. It is also to be understood that while described in terms of a repair, exemplary embodiments may be employed during initial fabrication.

The terms "about" and "substantially" are intended to include a degree of error associated with measurement of the particular quantity and/or quality based upon available equipment at time of filing the application. For example, the terms "about" and/or "substantially" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A method of reversing stresses in a component comprising:
cold working a substrate creating a first stress level in the component; and
applying a material to the substrate after cold working, the material inducing a second stress level that cancels the first stress level.

2. The method of claim 1, wherein cold working the substrate includes surface peening the substrate.

3. The method of claim 2, wherein peening the substrate comprises one of a glass bead peening process, a laser peening process, and a cavitation peening process.

4. The method of one of claims 1-3, wherein applying the material creates a thermal gradient between the substrate and the material

5. The method of claim 4, wherein applying the material to the substrate includes at least one of a cold spray deposition (CSD) process, and a flame spray process.

6. The method of one of claims 1-5, wherein applying material to the substrate comprises an additive manufacturing process.

7. The method of one of claims 1-6, further comprising: removing a portion of the substrate to form a repair zone.

8. The method of claim 7, wherein cold working the substrate includes cold working the repair zone.

9. The method of claim 8, wherein applying the material to the substrate includes replacing the portion of the material at the repair zone.

10. The method of claim 9, wherein replacing the portion of the material includes one of a cold spray deposition process and a flame spray process.

11. A gearbox housing formed by the method of one of claims 1-10.

12. A gearbox housing repaired by the method of one of claims 1-10.

13. An airframe component formed by the method of one of claims 1-10.

14. An airframe component repaired by the method of one of claims 1-10.
